# EUROPEAN PATENT APPLICATION

(11) **EP 4 142 082 A2**
(43) Date of publication of application: **01.03.2023**
(21) Application number: 22190284.4
(22) Date of filing: 12.08.2022
(51) Int. Cl.: H02H 3/00, H02H 3/08

(54) **ADJUSTABLE OVERCURRENT PROTECTION CIRCUIT**

(30) Priority: 12.08.2021 CN 202121882716 U
(71) Applicant: Guangdong Giwee Technology Co. Ltd, Foshan City, Guangdong 528244 (CN)
(72) Inventor: PU, Zhicheng, Foshan City, 528244 (CN)
(74) Representative: Dehns

(57) **Abstract**

An adjustable overcurrent protection circuit disclosed in the invention includes an external power supply, an IPM module, and a protection value adjustment unit configured to adjust current protection of the IPM module as required, wherein the IPM module includes inverter units NW, NV, and NU and a pin CIN, the adjustment unit includes a resistor R1, a resistor R2, a resistor R3, a resistor R4, a resistor R5, a capacitor C1, a capacitor C2, and a chip IC1, the external power supply is connected to one end of the resistor R1, the other end of the resistor R1 is connected to one end of the resistor R3 to form a first node, the other end of the resistor R3 is connected in series to the resistor R5 to form a second node, the IC1 is provided with a pin 1, a pin 2, and a pin 3, the resistor R2 is connected to the capacitor C2 to form a third node, and the pin 1 of the IC1 is connected to the third node.

## Description

The invention relates to the field of air conditioner technologies, and more particularly, to an adjustable overcurrent protection circuit.

Generally, for overcurrent protection, an inverter air conditioner circuit employs overcurrent protection built in an IPM module. Due to a large power of a sampling resistor, a resistance value is a non-inductive resistor and the resistance value is small. There are not many general-purpose materials; therefore, a protection current resulted by inputting a voltage value, which is obtained by multiplying the sampling resistance by the current, to a built-in reference protection voltage of about 0.48V in the IPM module is probably improper. Therefore, in order to adapt to this protection value, an external comparator is needed to particularly set a current protection value, and the magnitude of the protection current is adjusted by adjusting the magnitude of a threshold value of the comparator.

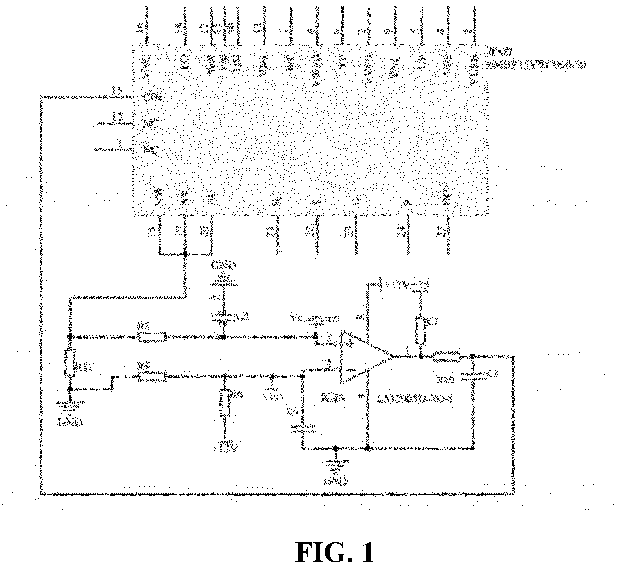

As shown in FIG. 1, R11 is a non-inductive resistor with a sampling resistance at an mΩ level, and if a protection current is only about 2A to 3A on a small drive, an input voltage of Vcompare1 is only tens of mV, and a set comparison voltage value will be very small, which is very easy to be interfered to perform false triggering, or due to the lack of accuracy of the comparator, it is mistakenly believed that voltages on both sides of the input voltage are the same, resulting in an output at a high level to a CIN pin to trigger protection of the IPM module. If the comparison is to be performed with an operational amplifier provided additionally to the circuit to amplify the voltage, the design cost will increase. The operational amplifier and the comparator will each need to be configured with one corresponding resistor separately, resulting in a complicated circuit and an increased cost.

In view of this, an objective of the present invention may be to provide an adjustable overcurrent protection circuit, so as to realize efficient current limiting protection and reduce a design cost at the same time.

According to a first aspect of the invention there is provided an adjustable overcurrent protection circuit including an external power supply, an IPM module, and a protection value adjustment unit configured to adjust current protection of the IPM module as required, wherein the IPM module includes inverter units NW, NV, and NU and a pin CIN, the adjustment unit includes a resistor R1, a resistor R2, a resistor R3, a resistor R4, a resistor R5, a capacitor C1, a capacitor C2, and a chip IC1, the external power supply is connected to one end of the resistor R1, the other end of the resistor R1 is connected to one end of the resistor R3 to form a first node, the other end of the resistor R3 is connected in series to the resistor R5 to form a second node, the IC1 is provided with a pin 1, a pin 2, and a pin 3, the resistor R2 is connected to the capacitor C2 to form a third node, and the pin 1 of the IC1 is connected to the third node.

Optionally, the resistor R1 and the resistor R3 both adopt resistors having resistance values at a KΩ level.

Optionally, the resistor R5 adopts a resistor having a resistance value at an MΩ level.

Optionally, the resistor R2 adopts a resistor having a resistance value of 0Ω, and the resistor R2 has one end connected to the resistor R3 and the other end connected to the pin CIN.

Optionally, the inverter units NW, NV, and NU of the IPM module are all connected to the second node.

Optionally, one end of the resistor R4 is connected to the external power supply, and the other end of the resistor R4 is connected to the pin 3 of the IC1.

Optionally, the external power supply is a +5V power supply.

Optionally, a model of the IPM module is 6MBP15VRC060-50.

Optionally, the chip IC1 adopts a voltage regulator chip in a model of TL431.

Optionally, the resistor R5 is a non-inductive sampling resistor.

Compared with the prior art, an adjustable overcurrent protection circuit provided by the present invention may have the following beneficial effects: by using a simple circuit, there may be no need to adjust a sampling resistor, and the increase or decrease of the protection current circuit may be realized by configuring a common small-power bias resistor or by improving a threshold value of the protection voltage with a simple circuit; therefore, the structure may be simple, the circuit design cost may be low, and easy promotion may be achieved.

In order to explain the embodiments of the present application more clearly, accompanying drawings will be introduced briefly in the following by way of example only. The accompanying drawings in the following description are only some embodiments of the present invention. For those of ordinary skill in the art, other accompanying drawings may also be obtained from these accompanying drawings without any creative effort.
FIG. 1 is a schematic circuit diagram of an overcurrent protection circuit in the background technology;
FIG. 2 is a schematic circuit diagram of an adjustable overcurrent protection circuit;
FIG. 3 is a structural block diagram of an adjustable overcurrent protection circuit.

In the drawings: 10-Adjustment unit, 20-External power supply, and 30-IPM module.

In order to make the objective, technical solutions, and advantages of the present invention clearer, the present invention will be described in further detail below with reference to the accompanying drawings and the embodiments. It should be understood that the specific embodiments described herein are only used for explaining the present invention, and are not intended to limit the present invention.

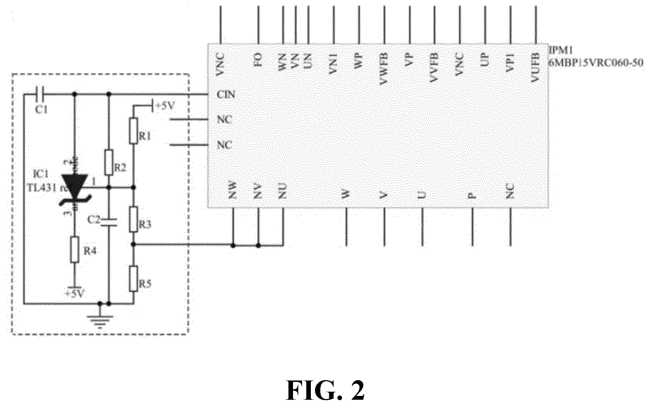

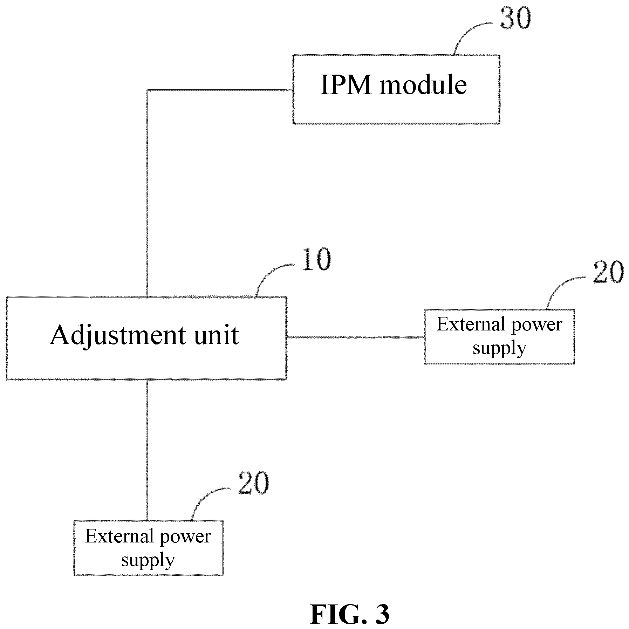

Referring to FIG. 2 and FIG. 3, an adjustable overcurrent protection circuit includes an external power supply 20, an IPM module 30, and a protection value adjustment unit 10 configured to adjust current protection of the IPM module 30 as required. The IPM module 30 includes inverter units NW, NV, and NU and a pin CIN, the adjustment unit 10 includes a resistor R1, a resistor R2, a resistor R3, a resistor R4, a resistor R5, a capacitor C1, a capacitor C2, and a chip IC1. The external power supply 20 is connected to one end of the resistor R1, the other end of the resistor R1 is connected to one end of the resistor R3 to form a first node, the other end of the resistor R3 is connected in series to the resistor R5 to form a second node. The IC1 is provided with a pin 1, a pin 2, and a pin 3. The resistor R2 is connected to the capacitor C2 to form a third node, and the pin 1 of the IC1 is connected to the third node.

In the embodiments, the resistor R1 and the resistor R3 both adopt resistors having resistance values at a KΩ level; the resistor R5 adopts a resistor having a resistance value at an MΩ level; the resistor R2 adopts a resistor having a resistance value of OQ, and the resistor R2 has one end connected to the resistor R3 and the other end connected to the pin CIN. The inverter units NW, NV, and NU of the IPM module 30 are all connected to the second node. One end of the resistor R4 is connected to the external power supply 20, and the other end of the resistor R4 is connected to the pin 3 of the IC1.

When a protection current I is lower than a reference: the resistor R1 is connected to the power supply, and the resistor R3 is connected in series to the resistor R5. By selection, resistance values of the resistor R1 and the resistor R3 are both at about the KΩ level, and the resistor R5 is at the mΩ level; therefore, a current flowing into the resistor R5 from the power supply through the resistor R1 and the resistor R3 is basically negligible compared to a current flowing into the sampling resistor R5 from NW, NV, and NU of the IPM module 30 (generally, a running current of a motor is about several hundred milliamperes, while the current flowing through the resistor R1 is only several milliamperes). Therefore, without affecting the accuracy of the sampling current, the voltage flowing into the pin CIN is changed from the original voltage across the resistor R5 to a total voltage across the resistor R3 and the resistor R5.

When the protection current I is higher than the reference: if the resistor R5 is 50mΩ, the protection current is 0.48V/0.05Ω=9.6A, and the actually required protection current is larger than 9.6A. At this time, only changing an IPM protection threshold can the protection current be increased; however, the IPM cannot be changed, so the chip IC1 is added, and a reference value of the chip IC1 is 2.5V at this time. After a voltage exceeding 2.5V flows into the pin 3 of the chip IC1, the pin 2 and the pin 3 of chip IC1 are turned on, 5V is connected to VCIN through R4, and protection of the IPM module 30 is triggered. At this time, the actual current protection calculation is the same as above, but the voltage protection threshold has been changed from 0.48V to 2.5V

Specifically, the external power supply 20 is a +5V power supply.

In the embodiments, a model of the IPM module 30 is 6MBP15VRC060-50.

In the embodiments, the chip IC1 adopts a voltage regulator chip in a model of TL431.

Specifically, the resistor R5 is a non-inductive sampling resistor.

Because a conventional non-inductive sampling resistor has a high power and a small resistance, a selectable range is limited in a practical application, and the required power or resistance value cannot be arbitrarily selected. For the IPM module 30, Vcin=0.48V, so for the protection current, Vcin=IR, the protection current is determined after the resistance value of the resistor is selected. The internal protection threshold of the IPM remains unchanged, and therefore, the protection current can only be changed by changing the threshold value or changing the voltage division value of the sampling resistor.

In the invention, in actual application, whether a device is installed is decided depending on whether the protection current I is lower than the reference or the protection current I is higher than the reference, thereby it can flexibly change the magnitude of the protection current, and changing the magnitude of the protection current does not need to modify the sampling resistor. Compared with the existing circuit, the invention is simpler in design and lower in design cost, only low-power common resistors R1, R3, and R2 and C1 need to be added to reduce the protection current, and only low-power common resistors R1 and R3, the chip IC1, and the capacitor C2 need to be added to increase the protection current, the cost is lower than adding an operational amplifier and a comparator, the circuit principle and PCB design are compatible, the reference current may be increased or reduced or the reference current is kept according to the actual application; therefore, the design is flexible and changeable, and the circuit is simple and does not take up the PCB space.

The adjustable overcurrent protection circuit provided by the present invention is described in detail above. The various embodiments in the specification are described in a progressive manner, and each embodiment focuses on the differences from other embodiments, and the same and similar parts between the various embodiments may be obtained with reference to each other. It should be pointed out that for those of ordinary skill in the art, without departing from the principles of the present application, several improvements and modifications can also be made to the present application, and these improvements and modifications also fall within the protection scope of the claims of the present application.

It should further be noted that in this specification, relational terms such as first and second are only used for distinguishing one entity or operation from another, and do not necessarily require or imply any such actual relationship or sequence existing between these entities or operations. Moreover, the terms "include," "comprise," or any other variations thereof are intended to encompass a non-exclusive inclusion such that a process, a method, an article, or a device including a series of elements includes not only those elements, but also other elements not explicitly listed or elements inherent to such process, method, article, or device. Without further limitation, an element defined by the phrase "including a..." does not exclude the presence of additional identical elements in a process, a method, an article, or a device that includes the element.

## Claims

1. An adjustable overcurrent protection circuit, comprising an external power supply (20), an IPM module (30), and a protection value adjustment unit (10) configured to adjust current protection of the IPM module (30) as required, wherein the IPM module (30) comprises inverter units NW, NV, and NU and a pin CIN, the adjustment unit (10) comprises a resistor R1, a resistor R2, a resistor R3, a resistor R4, a resistor R5, a capacitor C1, a capacitor C2, and a chip IC1, the external power supply (20) is connected to one end of the resistor R1, the other end of the resistor R1 is connected to one end of the resistor R3 to form a first node, the other end of the resistor R3 is connected in series to the resistor R5 to form a second node, the IC1 is provided with a pin 1, a pin 2, and a pin 3, the resistor R2 is connected to the capacitor C2 to form a third node, and the pin 1 of the IC1 is connected to the third node.

2. The adjustable overcurrent protection circuit according to claim 1, wherein the resistor R1 and the resistor R3 both adopt resistors having resistance values at a KΩ level.

3. The adjustable overcurrent protection circuit according to claim 1 or 2, wherein the resistor R5 adopts a resistor having a resistance value at a MΩ level.

4. The adjustable overcurrent protection circuit according to claim 1, 2 or 3, wherein the resistor R2 adopts a resistor having a resistance value of 0Ω, and the resistor R2 has one end connected to the resistor R3 and the other end connected to the pin CIN.

5. The adjustable overcurrent protection circuit according to any preceding claim, wherein the inverter units NW, NV, and NU of the IPM module (30) are all connected to the second node.

6. The adjustable overcurrent protection circuit according to any preceding claim, wherein one end of the resistor R4 is connected to the external power supply (20), and the other end of the resistor R4 is connected to the pin 3 of the IC1.

7. The adjustable overcurrent protection circuit according to any preceding claim, wherein the external power supply (20) is a +5V power supply.

8. The adjustable overcurrent protection circuit according to any preceding claim, wherein a model of the IPM module (30) is 6MBP15VRC060-50.

9. The adjustable overcurrent protection circuit according to any preceding claim, wherein the chip IC1 adopts a voltage regulator chip in a model of TL431.

10. The adjustable overcurrent protection circuit according to any preceding claim, wherein the resistor R5 is a non-inductive sampling resistor.
